Europäisches Patentamt

European Patent Office

Office européen des brevets

(19)

(11) Publication number: **0 062 130**
A1

(12) # EUROPEAN PATENT APPLICATION

(21) Application number: **81305975.5**

(22) Date of filing: **21.12.81**

(51) Int. Cl.³: **B 60 B 7/00**

(30) Priority: **07.04.81 GB 8110846**

(71) Applicant: **McMahon, James Kevan, Tresco Ravensdale Road, Heaton, Bolton Lancashire (GB)**

(43) Date of publication of application: **13.10.82 Bulletin 82/41**

(72) Inventor: **McMahon, James Kevan, Tresco Ravensdale Road, Heaton, Bolton Lancashire (GB)**

(84) Designated Contracting States: **AT BE CH DE FR IT LI LU NL SE**

(74) Representative: **Daunton, Derek, 94, Market Street, Manchester M1 1PJ (GB)**

(54) **Wheel trim.**

(57) Free ends of a strip (10) are inserted into a clip (15) to form an annulus (20) which is offered up to the wheel (not shown) it is required to fit. The size of the annulus (20) is adjusted, by cutting pieces off one end of the strip (10), until the annulus (20) will fit tightly into the wheel's rim. Then the clip (15) is crimped onto the free ends of permanent annulus (20).

JAMES KEVAN McMAHON

SPECIFICATION

WHEEL TRIM

This invention relates to wheel trims for embellishing the road wheels of vehicles such as cars.

Car owners often like to improve the appearance of their cars and usually start by improving the look of the road wheels. At present not much can be done to improve the appearance of conventional wheels of pressed steel except to change their

EP081281                    - 2 -

colour with paint or to fit custom-made wheel trims.
However, the appearance of a re-painted wheel quickly deteriorates as the paint becomes chipped and
scratched.

Custom-made wheel trims are a problem for
all concerned.  The manufacturer has to produce a
wheel trim for each size of wheel.  Because each
packaged wheel trim set will take up a lot of
space, the manufacturer must have a large storage
area to accommodate a full range of sizes, and
much space is involved in transportation.  The
retailer also suffers from the problem of storage
of a full range of sizes.

As an alternative to re-painting or fitting
custom made wheel trims, one can fit wheels which
have been cast, for example of an aluminium-magnesium alloy.  Such wheels are very expensive and,
although they are usually highly polished to start
with, they soon become tarnished and encrusted with
corrosion.

ED081281                    - 3 -

It is also possible, as disclosed in British
Patent Specification No. 848716, to fit a combined
tyre trim-wheel trim to a vehicle wheel.  In this
case, the wheel trim serves to mount the tyre trim
and is secured to the lip of the wheel rim by means
of a plurality of clips.

An object of the invention is to provide a
wheel trim which can be fitted to any size of vehicle
wheel, so as to embellish the wheel, and which can be
fitted in a very simple and convenient manner by the
vehicle owner, without the use of special tools or
skill.

Pursuant hereto, the present invention provides
a wheel trim comprising a strip of substantially L-
shaped cross-section and joining means joining free
ends of the strip together to form an annulus characterised in that the upright of the L is shaped so
as to directly interfit with the rim of a vehicle
wheel, within a circular space defined by the rim,

0062130

ED081281                    - 4 -

to embellish the wheel.

The strip is preferably a metal foil coated in a plastics material.  The joining means may conveniently be a clip of substantially L-shaped cross-section, and this clip may have lips on the free ends of the upright and foot of the L for engaging around the strip.  Then, the clip may be crimped onto the free ends of the strip.

For contributing to the security of fitting of the wheel trim to a  wheel rim adhesive may be provided on the upright of the L-shaped strip. This adhesive may be, for instance, in the form of adhesive blobs or a self-adhesive band, e.g. of extruded foam, about a  quarter of an inch wide, Such a band may have a protective wrapping  covering the adhesive, this wrapping being removed before the wheel trim is fitted to its wheel, when the self-adhesive band will serve to hold the trim in place.

0062130

ED081281 - 5 -

Alternatively, or in addition to the adhesive, the strip may have formations, preferably resilient, which serve to resist removal of the trim from the wheel or reduce slack between the trim and the wheel.

The wheel trim of the invention may be sold as a kit comprising a strip and joining means in the form of a clip.

The invention also provides, as a further feature thereof, a method of making a wheel trim comprising a strip of substantially L-shaped cross-section and joining means, which comprises joining free ends of the strip together by the joining means to form an annulus which will interfit the rim of a vehicle wheel to embellish the wheel.

The invention will be described further, by way of example, with reference to the accompanying drawing in which:-

ED081281                    - 6 -

Fig. 1 is a perspective view illustrating the components of a preferred embodiment of the wheel trim of the invention;

Fig. 2 is a perspective view illustrating the components of Fig. 1 assembled to form the wheel trim, to a reduced scale compared with Fig. 1;

Fig. 3 is an enlarged radial section through part of a wheel illustrating the wheel trim of Fig. 2 fitted in place;

Fig. 4 is a section comparable with part of Fig. 3, but to a further enlarged scale, and illustrating a second embodiment of the wheel trim of the invention; and

Fig. 5 is a view similar to Fig. 4 illustrating a third embodiment.

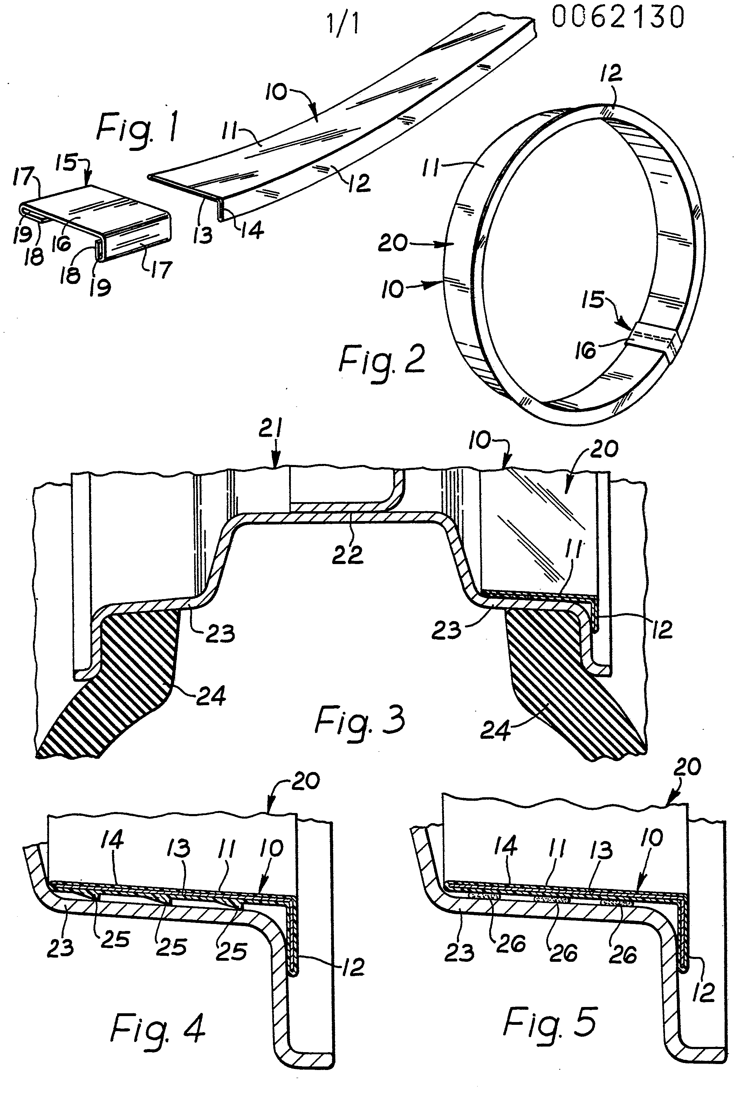

The preferred embodiment of the wheel trim of the invention illustrated in Figs. 1 to 3 comprises a strip 10 of substantially L-shaped cross-section and, as joining means, a clip 15. The strip 10 has a broad portion 11 corresponding to the upright of the L and a foot portion 12 corresponding to the foot of the L. The strip 10 comprises a metal foil 13 coated with a plastics material 14, e.g. by extrusion.

The clip 15 is made of aluminium or like metal or alloy, which may be crimped, and comprises a substantially L-shaped body 16 having lips 18 at the free ends of the upright and foot of the L. Defined between the lips 18 and the clip body 16 are grooves 19 which can accept the free ends of the strip 10. The arrangement of the lips 18 is readily discernable from Fig. 1.

When the free ends of the strip 10 are located in the clip 15 they form an annulus 20, as illustrated in Fig. 2. The annulus 20 may be fitted into a wheel 21, as illustrated in Fig. 3, the wheel

ED081281                    - 8 -

comprising a body 22 having a rim 23 and a tyre 24.

The wheel trim is assembled in the following manner. The free ends of the strip 10 are joined together by being pushed into the clip 15 and are retained by the lips 18 of the clip 15, with the foot portion 12 of the strip 10 projecting outwardly from the axis of the annulus 20 formed by the strip 10 and the clip 15. The annulus 20 is now offered up to the wheel it is required to fit. If the annulus 20 is too large to fit inside the wheel rim 23, one end of the strip 10 can be taken out of the clip 15 and a short length cut off the strip 10. The step, of offering up the annulus 20 to the wheel 21 and then cutting off some of the strip are repeated until the annulus 20 will fit tightly into the wheel rim 23. When the correct fit has been achieved, the clip 15 is crimped tightly onto the free ends of the strip 10, making the wheel trim a permanent annulus 20. The wheel trim is then pushed home inside the wheel rim 23 as illustrated in Fig. 3 where it embellishes the wheel 21.

ED081281                        - 9 -

To achieve an effective fit of the wheel trim, with the wheel rim 23, the strip 10 should be cut to exactly the right size as discussed above, otherwise adjustments (e.g. the introduction of a spacer between the facing ends of the strip, 10 within the clip 15) may be necessary.  The accuracy needed for fitting the strip 10 can be reduced somewhat by use of a  modified strip configuration, such as is illustrated in Fig. 4 or by providing for the strip to be adhered in place, as is illustrated in Fig. 5.

In the embodiment of Fig. 4 the broad portion 11 of the strip 10 has formations which serve to engage with the wheel rim 23 and resist separation or removal of the trim.  These formations are in the form of integrally-moulded saw-tooth shaped ribs or protrusions 25 which extend all the way around the annulus formed by the strip 10.  These ribs or protrusions 25 will yield at least to a small extent when the trim is fitted to the wheel.

ED081281                    - 10.-

A modification of the embodiment shown in Fig. 4 may have protrusions 25 which are larger and more resilient than those shown in Fig. 4 and which serve to reduce slack between the wheel trim and the wheel.

In the embodiment of Fig. 5 adhesive, in the form of blobs 26 is provided to secure the wheel trim in place. The blobs 26 may be applied either to the wheel rim or, more preferably, to the broad portion 11 of the strip 10. The blobs 26 act not only as adhesive, but also as a partially deformable packing material between the trim and the rim 23.

In another embodiment (not shown), the strip 10 has, along the majority of the broad portion 11 of its length, a self-adhesive band of extruded plastics foam. This self-adhesive band, which is about a quarter of an inch wide, has adhesive on two opposing surfaces. The adhesive can be applied to the self-adhesive as a continuous film or dis-

0062130

EDO81281                   - 11 -

crete blobs or by a doctor blade technique.  The
adhesive on one side of the self-adhesive band
secures the self-adhesive band to the strip 10.
The adhesive on the other side of the self-adhesive
band is covered by a  protective wrapping which is
removed before fitting the trim to its wheel.

The wheel trim of the invention is not limited
to the above described embodiments.  The strip can
be all metal or all plastics, and, if it is wholly
plastics, the joining means can be an adhesive.

The advantages of a wheel trim of the present
invention over conventional wheel trims are innumerable.  It is, easy to fit to any size of vehicle
wheel;  the only tools needed are tools to cut
the strip, such as a strong pair of scissors, and
a tool for crimping the clip (if a clip provides the
joining means).  Because the wheel trim comes in only
one size and only takes up a small amount of space,
the costs of manufacture and distribution are kept low, thereby providing the wheel trim as an inexpensive accessory for the vehicle owner who
wishes to embellish the wheels of his vehicle.

ED081281                    - 13 -

CLAIMS:

1.    A wheel trim comprising a strip of substantially L-shaped cross-section and joining means joining free ends of the strip together to form an annulus characterised in that the upright of the L is shaped so/directly interfit with the rim of a vehicle wheel, within a circular space defined by the rim, to embellish the wheel.

*as to*

2.    A wheel trim as claimed in claim 1, further characterised in that the strip is a metal foil coated with a plastics material.

3.    A wheel trim as claimed in claim 1 or 2, further characterised in that the joining means is a clip.

4.    A wheel trim as claimed in claim 3, further characterised in that the clip is substantially L-shaped in cross-section having lips at the free ends of the upright and foot of the L for engaging around the strip.

5. A wheel trim as claimed in any preceding claim characterised by provision of adhesive on the strip to adhere the trim to the wheel rim.

6. A wheel trim as claimed in claim 5 characterised in that adhesive is in the form of blobs.

7. A wheel trim as claimed in claim 5 further characterised by provision of the adhesive as a self-adhesive band having adhesive on two opposing sides, the adhesive on one side securing the self-adhesive band to the strip of the wheel trim and the adhesive on the other side serving to adhere the trim to the wheel rim.

8. A wheel trim as claimed in any of claims 1 to 6 characterised in that the strip has formations which serve to resist removal of the wheel trim from a wheel rim.

9. A wheel trim as claimed in any preceding claim further characterised in that the strip has formations which are resilient and serve to reduce slack

ED081281                    - 15 -

the wheel
between/trim and the rim.


10.    A wheel trim substantially as hereinbefore
described with reference to and as illustrated in
the accompanying drawing.


11.    A method of making a wheel trim comprising
a strip of substantially L-shaped cross-section
and joining means, which comprises joining free
ends of the strip together by the joining means
to form an annulus characterised in that said
annulus is shaped to directly interfit the rim of
the vehicle wheel, within a circular space defined
by the rim, to embellish the wheel.


12.    A method as claimed in claim 11 further characterised in that the joining means is a clip, and
further including a step of crimping the clip onto
the free ends of the strip.


13.    A method as claimed in claim 11 or 12 characterised by provision of adhesive to retain the wheel trim the rim of a wheel.

14.    A method of making a wheel trim substantially
as hereinbefore described with reference to and as
illustrated in the accompanying drawing.

15.    A kit of parts comprising a strip of substantially L-shaped cross-section and joining means
in the form of a clip, for producing a wheel trim
as claimed in any of claims 1 to 10.

Fig. 1

Fig. 2

Fig. 3

Fig. 4

Fig. 5

0062130

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 891 276 (SPISAK) <br> *The entire text; figures 1-3* | 1,8,9 | B 60 B 7/00 |
| X | US-A-1 855 022 (KELLOGG) <br><br> *The entire text; figures 1-8* | 1,3,11 ,12 | |
| X | US-A-2 963 325 (ASKE) <br> *Column 7, line 66 - column 8, line 2; column 5, lines 8-28; figures 26,4* | 1,8,9 | |
| X | DE-B-1 123 932 (ASKE) <br> *Column 8, lines 45-63; figures 20-28* | 1,4,11 | |
| X | FR-A-1 249 390 (LEPESQUEUR) <br> *Page 1, left-hand column, line 31 - page 2, left-hand column, line 5; figures 1,3,5-10* | 1,4 | TECHNICAL FIELDS SEARCHED (Int. Cl. 3) <br><br> B 60 B 7 |
| A | FR-A-1 242 067 (ASKE) <br> *Page 3, right-hand column, line 50 - page 4, left-hand column, line 7; page 6, left-hand column, lines 5-19; figures 26,28,29,30,36* | 1,8,9 | |
| A | US-A-3 256 044 (FISHER) <br> *The entire text; figures 1,4,5* | 1,2 | |

The present search report has been drawn up for all claims

| Place of search THE HAGUE | Date of completion of the search 06-07-1982 | Examiner AYITER I. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82